## Europäisches Patentamt

## European Patent Office

## Office européen des brevets

(11) Veröffentlichungsnummer: **0 066 677**
**B1**

(12) **EUROPÄISCHE PATENTSCHRIFT**

(45) Veröffentlichungstag der Patentschrift :
**28.05.86**

(21) Anmeldenummer : **82102259.7**

(22) Anmeldetag : **19.03.82**

(51) Int. Cl.⁴ : **B 62 D 55/06,** B 62 D 11/18,
B 62 D 59/02

(54) Antriebseinrichtung für ein Raupenfahrzeug mit einem dazugehörigen Anhänger.

(30) Priorität : **05.06.81 IT 2216881**

(43) Veröffentlichungstag der Anmeldung :
**15.12.82 Patentblatt 82/50**

(45) Bekanntmachung des Hinweises auf die Patenterteilung : **28.05.86 Patentblatt 86/22**

(84) Benannte Vertragsstaaten :
**AT CH DE FR LI SE**

(56) Entgegenhaltungen :
FR-A- 1 464 463
FR-A- 2 477 494
US-A- 3 035 654
US-A- 3 215 219
US-A- 3 244 249
US-A- 3 680 878

(73) Patentinhaber : **Prinoth, Erich**
**Via Purger, 181**
**I-39046 St. Ulrich (IT)**

(72) Erfinder : **Prinoth, Erich**
**Via Purger, 181**
**I-39046 St. Ulrich (IT)**

(74) Vertreter : **Mayer, Hans Benno**
**Via dell'Orso 7/A**
**I-20121 Milano (IT)**

**Beschreibung**

Die vorstehende Erfindung betrifft ein Raupenfahrzeug, dessen Raupen von Hydraulikmotoren angetrieben werden und ferner bezieht sich die Erfindung auf einen mit Raupen ausgeruesteten Anhaenger, dessen Raupen ebenfalls ueber Hydraulikmotoren angetrieben werden.

Es ist aus dem Stand der Technik bekannt geworden, ein mit Antriebsraupen versehenes Fahrzeug auch mit einem Anhaenger auszuruesten, der ebenfalls Antriebsraupen aufweist. (Siehe hierzu z. B. US-A-3 244 249, US-A-3 035 654 und US-A-3 215 219).

Bei den bekannten Fahrzeugen dieser Art erfolgt die Kraftuebertragung meistens vom ziehenden Fahrzeug an den Anhaenger ueber zwischengeschaltete Differentiale und Kardanwellen. Fuer diese bekannten Fahrzeuge sind ferner mechanische Mittel zwischen dem Zugfahrzeug und dem Anhaenger vorgesehen, die an der Krafteinwirkung ein Verschieben und ein winkliges Anstellen der zwei zusammengekoppelten Fahrzeuge, gegenueber deren Laengsachse, vornehmen, um somit, mit der aus zwei Fahrzeugen bestehenden Gruppe, eine Kurve befahren zu koennen.

Der Nachteil dieser bekannten Ausfuehrungsform ist darin zu sehen, dass die Neigung oder Anstellung zwischen den beiden Fahrzeugen ueber eine erhebliche Krafteinwirkung erfolgt, die unter Zuhilfenahme von mechnanischen oder hydraulischen Steuermitteln bewerkstelligt wird.

Ferner, zur Bewegungsuebertragung von dem Zugahrzeug auf die Raupen des Anhaengers, sind teure und vor allem schwere Baugruppen, z. B. Differenziale und Kardanwellen vorzusehen. Diese mechanischen Bauteile stellen einen aeusserst kritischen Punkt fuer den Gesamtmechanismus des Fahrzeuges dar, besonders dann, wenn man beruecksichtigt, dass z. B. Raupenfahrzeuge, die zur Instanthaltung von Skipisten Verwendung finden, unter atmosphaerischen Bedingungen eingesetzt werden, die nicht gerade als ideal zu bezeichnen sind. Daher werden saemtliche mechanischen Baugruppen dieser bekannten Raupenfahrzeuge maximal belastet. Ferner stellt die Verbindung, zwischen dem Zugfahrzeug und dem Anhaenger, unter Zuhilfenahme mechanischer Bauteile, die fuer die Uebertragung der Antriebskraft, sowie fuer die gegenseitige Anstellung der Fahrzeuge unter Krafteinfluss zum Befahren einer Kurve erforderlich sind, eine erhebliche Einschraenkung des Fahrzeuges, hinsichtlich seiner leichten und einfachen Fahrweise und Steuerbarkeit, bei Kurvenfahrt dar. Aus diesem Grunde koennen mit den bekannten Fahrzeugen dieser Art, lediglich Kurven mit recht grossen Radien, sowie Gelaendeflaechen, mit flachen Neigungswinkeln befahren werden.

Ein weiterer Nachteil der vom Einsatz mechanischer Verbindungsteile, sowie mechanischer Antriebseinheiten fuer die gegenseitige Verschiebung der Fahrzeuge herruehrt, ist darin zu sehen, dass erhebliche mechanische Schwierigkeiten auftreten, wenn von einer nahezu ebenen Gelaendeflaeche ploetzlich ein steiler Hang befahren werden soll. In diesem Fall, wenn der zu befahrende Hang grosse Steilheit aufweist, koennen schwerwiegende mechanische Schaeden in den Antriebseinheiten, Anhaegevorrichtungen und Steuereinrichtungen, wie diese in den bekannten Maschinen zum Einsatz gelangen, auftreten. Daraus geht hervor, dass das bisher beschriebene und vom Stand der Technik her bekannte Raupenfahrzeug keinesfalls in alpinem Gelaende eingesetzt werden kann, wo bekannterweise ganz andere Ansprueche an das Fahrvermoegen und die und die einfache Steuerbarkeit der Maschine gestellt sind, und Gelaende zu befahren sind, die von ebenen Flaechen in steile Haenge uebergehen, oder Unregelmaessikeiten, Buckel und Huegel aufweisen.

Dies gilt auch fuer die in der franzoesischen Patentschrift 1 464 463 beschriebenen Baumaschine.

Hierbei handelt es sich um eine schwere, als Raupenfahrzeug ausgebildetete Planierraupe, die mit einem Anhaengerfahrzeug wirkverbunden ist.

Um bei dieser Maschine eine Kurvenfahrt einleiten zu koennen, werden die Anriebsraeder stets gegenueberliegender Raupen, unter Zuhilfenahme von Fahrzeugbremsen, die ueber ein Fusspedal betaetigt werden, abgebremst um die Kurvenfahrt einzuleiten. Eine derartige Ausfuehrungsform ist auf den beschriebenen Antrieb aber nicht uebertragbar, da das erfindungsgemaesse Raupenfahrzeug ausser einer mechanischen Standbremse ueberhaupt nicht mit Bremsvorrichtungen ausgeruestet ist, da in bekannter Weise bei hydrostatischen Antrieben der Abbremsvorgang ueber steuerbare Drosselventile erfolgt, die den Oelfluss zu den Hydraulikmotoren vermindern. Neben einer unerwuenschten Gewichtszunahme aufgrund der Vorsehung von mechanischen Bremsen, tritt bei der im franzoesischen Patent 1 464 463 beschriebenen Vorrichtung ferner noch eine Veraenderung der Antriebsmomente an den abgebremsten Raupen auf. Dies ist jedoch gemaess der Aufgabestellung bei Raupenfahrzeugen der beschriebenen Art aeussserst unerwuenscht, da besonders bei Schneefahrzeugen neben einer aeusserst leichten Bauweise auch noch ein konstantes Antriebsmoment auf allen Raupen erwuenscht ist.

Aufgabe der vorstehenden Erfindung ist es, eine neue Antriebseinheit fuer ein Raupenfahrzeug, hautpsaechlich fuer ein Fahrzeug zum Instandhalten von Skipisten vorzuschlagen, das mit einem Anhaenger ausgeruestet ist und unter Verwendung zuverlaessiger und einfacher Mittel eine wendige, schnelle Kurvenfahrt erlaubt, die hinsichtlich der Kurvenradien absolut unbegrenzt ist, und ferner die Moeglichkeit zu schaffen, jederzeit schwer befahrbares alpines Gelaende schnell zu befahren und sicherzustellen, dass das Antriebsmoment auf allen Antriebsraupen stets konstant ist.

Diese Aufgabe wird erfindungsgemaess dadurch geloest, dass die Zugmaschine fuer jede Antriebsraupe eine getrennte Hydraulikpumpe aufweist, dass mit jeder Pumpe ein Hydraulikmotor fuer die zugeordnete Antriebsraupe verbunden ist, und, dass in Parallelschaltung mit jedem Motor der Zugmaschine auf dem Anhaeger ein entsprechender Motor vorgesehen ist, der einer Antriebsraupe, die auf der entgegengesetzten Seite der entsprechenden Raupe der Zugmaschine vorgesehen ist, zugeordnet ist.

Mit einer derartig ausgebildeten Antriebseinheit, wird es moeglich, schnell und einfach den gewuenschten Steuervorgang einzuleiten, ohne dass die vorher genannten Nachteile auftreten. Das so ausgebildete Antriebs- und Steuersystem hat sich als ausgesprochen zuverlaessig und einfach in seiner Instandhaltung und Reparatur erwiesen. Ferner, bei Auftreten eines Schadens im Antriebssystem des Anhaegers, wird die Funktionstuechtigkeit der gesamten Fahrzeuggruppe nicht unterbrochen, in jedem Fall kann die Fahrzeuggruppe ihren Ausgangs- oder Heimatpunkt noch erreichen.

Weitere Vorteile der Erfindung koennen der folgenden Beschreibung, den Unteranspruechen und den beigefuegten Zeichnungen entnommen werden.

Die erfindungsgemaesse Einrichtung wird nun genauer anhand eines Ausfuehrungsbeispieles beschrieben und in den Zeichnungen schematisch dargestellt.

Figuren 1-3 zeigen schematisch das Fahrzeug in verschiedenen Arbeitsstellungen ;

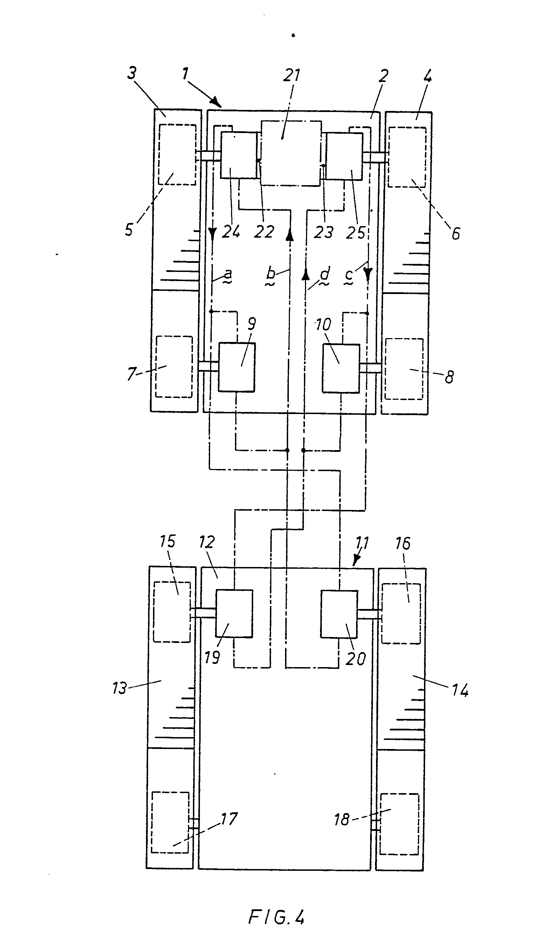

Figur 4 zeigt schematisch ein Zugfahrzeug zum Instandhalten von Skipisten, mit einem Anhaengerfahrzeug, sowie den entsprechenden Hydraulikeinheiten zum Antrieb und zum Steuern des Fahrzeuges ; und

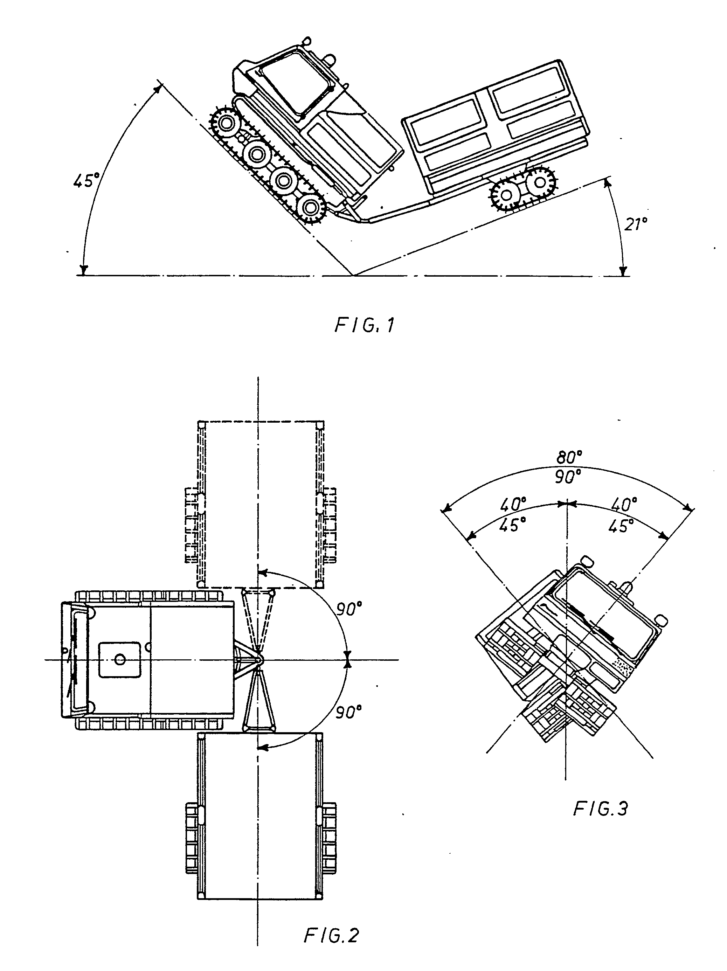

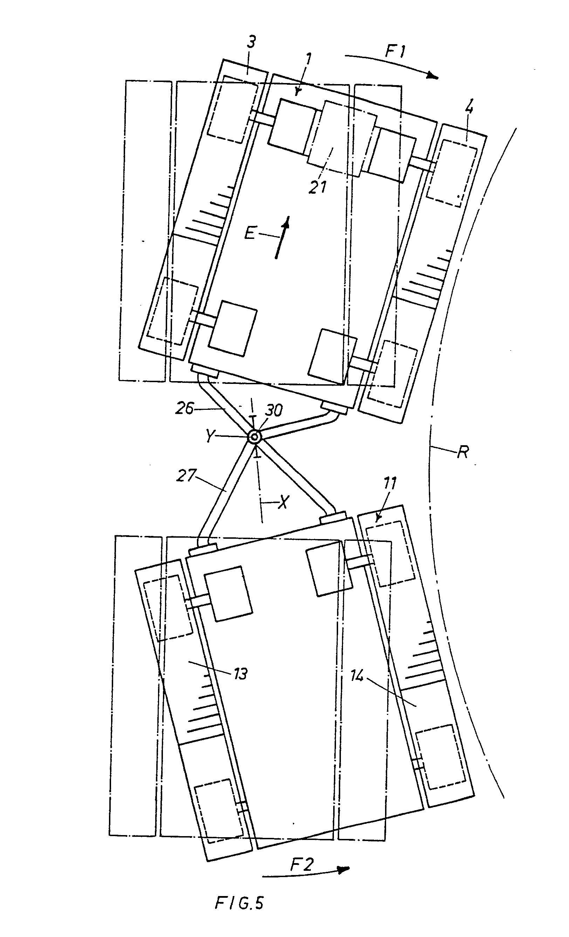

Figur 5 zeigt schematisch die Fahrzeuggruppe bei Kurvenfahrt. Wie der Fig. 1 zu entnehmen ist, besteht das gesamthaft mit 1 bezeichnete Zugfahrzeug, das z. B. fuer die Instandhaltung von Skipisten Verwendung findet, aus einem Rahmen 2, der an seinen Laengsseiten Antriebsraupen 3 und 4 aufweist. Die Antriebsraupen 3 und 4 werden von Raedern 5 und 6 aufgenommen, die an der Vorderseite des Fahrzeuges 1 angebracht sind, sowie von Raedern 7 und 8, die an der Rueckseite des Rahmens 2 gelagert sind. In vorteilhafter Weise, sind die Raeder 7 und 8 mit hydraulischen Antriebsmotoren 9 und 10 wirkverbunden.

Das Anhaegerfahrzeug 11 ist aus einer Plattform oder einem Rahmen 12 gebildet, und weist ebenfalls, an seinen Laengsseiten Raupen 13 und 14 auf, die an der Vorderseite des Fahrzeuges von Raedern 15 und 16 und an der Hinterseite des Fahrzeuges von Raedern 17 und 18 aufgenommen werden. Die Raeder 15 und 16 des Anhaegerfahrzeuges 11, sind zum Antrieb mit entsprechenden Hydraulikmotoren 19 und 20 wirkverbunden. Das Zugfahrzeug 1 ist mit einem Verbrennungsmotor 21 ausgeruestet, der Verbindungsflansche 22 und 23 fuer die Montage der Hydraulikpumpen 24 und 25 aufweist, die durch den Verbrennungsmotor 21 angetrieben werden.

Mit der Pumpe 24 ist in Parallelschaltung der Motor 9, der auf der linken Seite des Fahrzeuges 1 (Fig. 1) vorgesehen ist, verbunden, und weiterhin ist der Motor 20, der auf der rechten Seite des Anhaengerfahrzeuges 11 angeordnet ist, in Parallelschaltung verbunden.

Die Zufuhrleitung dieses Hydrauliksystems ist mit (a) gekennzeichnet, wogegen die Ruecklaufleitung mit (b) gekennzeichnet ist.

Auch die Pumpe 25 ist parallel mit einem Motor 10, der auf der rechten Seite des Zugfahrzeuges 1 vorgesehen ist, wirkverbunden, und weiter ist die Pumpe 25 in Parallelschaltung auch mit dem Motor 19, der auf der linken Seite des Anhaengers 11 angeordnet ist, verbunden.

In der Fig. 1 ist fuer dieses Hydrauliksystem die Zufuhrleitung mit (c), und die Ruecklaufleitung mit (d) gekennzeichnet.

Aus Gruenden der Uebersichtlichkeit, wurden die bekannten Steuer- und Kontrollventile dieses Hydrauliksystems nicht eingezeichnet, da sie in ihrem prinzipiellen Aufbau fuer einen Fachmann naheliegend sind und seit Jahren in Raupenfahrzeugen zur Instandhaltung von Skipisten, wie diese z. B. von der Fa. Prinoth, St. Ulrich (Italien) hergestellt werden, Verwendung finden.

Aus der Fig. 2 kann entnommen werden, dass das Zugfahrzeug 1 mit dem Anhaenger 11 unter Verwendung von fest angeordneten deichselartigen Gestaengen 26 und 27 verbunden ist. Zwischen den zwei Fahrzeugen 1 und 11, sind die Deichseln 26 und 27 unter Verwendung eines Gelenkes 30 (Kugelgelenk oder Doppelscharniergelenk), welches eine Drehbewegung auch um die Laengsachse zulaesst, verbunden. Somit besteht die Moeglichkeit einer Drehbewegung um die sich in Fahrtrichtung erstreckenden Laengsachse, sowie einer Neigung um die Achsen X und Y.

Die Arbeitsweise des erfindungsgemaessen Antriebs- und Steuersystems wird nun genauer anhand der Fig. 2 beschrieben. Soll die Fahrzeuggruppe 1 und 11 von « Geradeausfahrt » wie dies mit Strichpunktlinien in der Fig. 2 dargestellt ist, auf « Kurvenfahrt » entlang der schematisch mit R angedeuteten Kurve ueberfuehrt werden, so wird von der Bedienungsperson, die sich in der Fahrerkabine der Zugmaschine 1 befindet, der Steuervorgang unter Verwendung des fuer Raupenfahrzeuge bekannten Steuerknueppels eingeleitet, mit dem Ergebnis, dass die Raupe 4 in ihrer Bewegung abgebremst oder sogar angehalten wird, und lediglich die Raupe 3 unter Zuhilfenahme des Motors 9 angetrieben wird. Dies bewirkt ein Drehmoment, welches das Zugfahrzeug 1 in Richtung des Pfeiles F1 verschwenkt. Gleichzeitig, dank er sich ueberkreuzenden Hydraulikverbindung der Hydraulikmotoren, wird im dargestellten Fall auch der Motor 20 des Anhaengers 11 angetrieben, wogegen die Raupe 11 in ihrer

Bewegung abgebremst oder sogar angehalten wird.

Dies bewirkt ein Drehmoment des Anhaegers 11 in Richtung des Pfeiles F2.

Somit stellen sich die Fahrzeuge 1 und 11, auch aufgrund der Gelenkverbindung 30, die eine Drehbewegung der Fahrzeuge um die Achse Y ermoeglicht, in zueinander angewinkelten Stellung, wie dies schematisch in Fig. 2 dargestellt ist.

Nach Einleiten dieser Lenkbewegung, die ohne die Verwendung ueblicher, komplizierter, mechanischer Hilfsmittel, zum gegenseitigen Anstellen der Fahrzeuge unter Kraftaufwand, sehr einfach erfolgt, bringt die Bedienungsperson den Steuerknueppel erneut in seine neutrale Stellung, worauf saemtliche vier Antriebsraupen 3, 4, 13, 14, die nunmehr mit konstantem Drehmoment angegrieben werden, die Vorwaertsbewegung der Fahrzeuggruppe weiter fortfuehren. Die nunmehr erfolgende Fortbewegung, erfolgt gemaess Pfeil E entlang des Kurvenradius R.

Die Tatsache, dass auf saemtliche Raupen das gleiche Drehmoment einwirkt, hat wesentliche Vorteile fuer die Bodenhaftung der Fahrzeuge, besonders dann, wenn die Fahrzeuggruppe steigendes Gelaende befaehrt.

Sollten sich nach Einleitung der Kurvenfahrt Abdrifterscheinungen, aufgrund des Bestrebens der Fahrzeuggruppe in die urspruengliche Lage zurueckzukehren, einstellen, was mit einer allmaehlichen Rueckkehr zur Geradeausfahrt verbunden waere, oder aufgrund der, durch die Gelaendebeschaffenheit auftretenden Kraftvektoren Richtungsaenderungen eintreten, so koennen mit der erfindungsgemaessen Einrichtung schnell und einfach die entsprechenden Korrekturen eingeleitet werden. Dazu genuegt es, erneut auf den Steuerknueppel des Fahrzeuges einzuwirken.

Ist es erwuenscht, eine Linkskurve zu durchfahren, so genuegt es den Steuerknueppel des Zugfahrzeuges in entgegengesetzter Richtung zu betaetigen, wodurch nur die mit 4 bezeichnete rechte Raupe des Zugfahrzeuges, zusammen mit der linken Raupe 13 des Anhaengerfahrzeuges 11 betaetigt werden wuerden.

Fuer die gesamte Kurvenfahrt, ist die auf die rechte Raupe uebertragene Antriebskraft gleich der auf die linke Raupe uebertragene Antriebskraft, sofern keine aeussseren Stoerfaktoren auf die Fahrzeuggruppe einwirken.

Diese Tatsache erlaubt eine einfache Handhabung der Fahrzeuggruppe, sowie die Moeglichkeit einer groesseren Steigfaehgikeit, da das Haftvermoegen zwischen Boden und Raupen annaehernd gleich fuer jede Raupe ist.

## Patentansprüche

1. Antriebseinrichtung fuer ein Raupenfahrzeug (1) mit einem Raupenanhaenger (11), besonders ein Fahrzeug zum Instandhalten von Skipisten, dadurch gekennzeichnet, dass die Zugmaschine (1) fuer jede Antriebsraupe (3, 4) eine getrennte Hydraulikpumpe (24, 25) aufweist, dass mit jeder Hydraulikpumpe (24, 25) ein Hydraulikmotor (9, 10) fuer die zugeordnete Raupe (3, 4), verbunden ist, und dass in Parallelschaltung mit jedem Hydraulikmotor (9, 10) der Zugmaschine (1), ein entsprechender, auf dem Anhaegerfahrzeug (11) angeordneter Motor (19, 20) vorgesehen ist, der einer Antriebsraupe (13, 14), die auf der entgegengesetzten Seite der entsprechenden Raupe (3, 4) des Zugfahrzeuges (1) vorgesehen ist, zugeordnet ist.

2. Antriebseinrichtung, nach Patentanspruch 1, dadurch gekennzeichnet, dass sich die Hydraulikleitungen (a, b), die sich von der Hydraulikpumpe (24) zum Hydraulikmotor (9) auf der Zugmaschine (1), sowie zum entsprechenden Hydraulikmotor (20) auf dem Anhaengerfahrzeug (11) erstrecken, mit den Leitungen (c, d) des entsprechenden zweiten Motors (10), der auf der Zugmaschine (1) angeordnet ist, und sich zum zweiten Motor (19) auf den Anhaengerfahrzeug (11) erstrecken, kreuzen.

3. Antriebseinrichtung nach Patentanspruch 1, dadurch gekennzeichnet, dass ein Kugelgelenk (30) oder ein Doppelscharniergelenk zwischen den beiden Fahrzeugen (1, 11) angeordnet ist, und dass diese Gelenke (30) eine Drehbewegung um die Achsen (X-Y) ermoeglichen.

4. Antriebseinrichtung nach Patentanspruch 3, dadurch gekennzeichnet, dass die Fahrzeugdeichseln (26, 27) fest mit den zugeordneten Fahrzeugrahmen (2, 12) verbunden sind.

5. Antriebseinrichtung, nach Patentanspruch 1, dadurch gekennzeichnet, dass die entsprechenden Hydraulikpumpen (24, 25) derart in hydraulischer Wirkverbindung mit den zugeordneten Motoren (9, 10) stehen, dass bei Befahren einer Rechtskurve ein Abbremsen oder Blockieren der rechten Raupe (4) des Zugfahrzeuges (1), sowie der linken Raupe (13) des Anhaengerfahrzeuges (11) erfolgt, wogegen bei Befahren einer Linkskurve ein Abbremsen oder Blockieren der linken Raupe (3) des Zugfahrzeuges und der rechten Raupe (14) des Anhaengerfahrzeuges (11) erfolgt.

6. Antriebseinrichtung nach Patentanspruch 1-5, dadurch gekennzeichnet, dass nach Beenden des Steuervorganges die der entsprechenden rechten Raupe (4, 14) uebertragenen Kraefte, gleich den auf die entsprechende linke Raupe (3, 13) uebertragenen Kraefte und umgekehrt sind, und, dass die Summe der Drehzahlen der untereinander verbundenen Motoren (9, 20) gleich der Summe der Drehzahl der anderen beiden Motoren (10, 9) ist.

## Claims

1. A drive for a tracked vehicle (1) and its related tracked trailer (11), particularly a vehicle for the maintenance of a ski run tamping, characterized in that the towing vehicle (1) has, for each drive track (3, 4), a separate hydraulic pump (24, 25), that with each hydraulic pump (24, 25) is connected a hydraulic motor (9, 10), being linked to the corresponding track (3, 4), and that a similar motor (19, 20), provided on the trailer (11), is connected in parallel with each corresponding hydraulic motor (9, 10) of the towing vehicle (1), but linked to the drive track (13, 14) provided on the opposite side track (3, 4) of the towing vehicle (1).

2. A drive, according to Claim 1, characterized in that the hydraulic conduits (a, b), extending from the hydraulic pump (24) to the hydraulic motor (9) provided on the towing vehicle (1), and extending to the corresponding hydraulic motor (20) provided on the trailer (11), cross the conduits (c, d) of the second motor (10) provided on the towing vehicle (1) and extending to the corresponding second motor (19) provided on the trailer (11).

3. A drive, according to Claim 1, characterized in that a ball (30) or an universal joint is interposed between the two vehicles (1, 11) and that these joints (30) are adapted to perform a rotation about the axis (X-Y).

4. A drive, according to the Claim 3, characterized in that the drawbar arms (26, 27) are connected firmly to the respective frame (2, 12) of the vehicles.

5. A drive, according to Claim 1, characterized in that the respective hydraulic pumps (24, 25) are connected hydraulically with the corresponding motors (9, 10), such that in taking a curve to the right occurs braking or locking of the right track (4) of the towing vehicle (1) as well as braking and locking of the left track (13) of the trailer (11), and that in taking a curve to the left occurs braking or locking of the left track (3) of the towing vehicle (1) and of the right track (14) of the trailer (11).

6. A drive, according to Claim 1-5, characterized in that, that after terminating of steering, the forces applied to the corresponding right track (4, 14) are equal to the forces applied to the corresponding left track (3, 13), and vice versa, and that the sum of revolutions of the interconnected motors (9, 20) is equal to the sum of the revolutions of the other two motors.

**Revendications**

1. Ensemble d'entraînement pour véhicule à chenilles (1) pourvu d'une remorque à chenilles (11), en particulier pour véhicule d'entretien des pistes de ski, caractérisé en ce que le véhicule tracteur (1) comporte une pompe hydraulique séparée pour chaque chenille motrice (3, 4), en ce qu'un moteur hydraulique (9, 10) rattaché à la chenille (3, 4) correspondante est relié à chaque pompe hydraulique (24, 25), et en ce qu'il comporte, en parallèle avec chaque moteur hydraulique (9, 10) du véhicule tracteur (1), un moteur (19, 20) correspondant placé sur le véhicule remorqué (remorque) (11), rattaché à une chenille motrice (13, 14) se trouvant du côté opposé à la chenille (3, 4) correspondante du véhicule tracteur (1).

2. Ensemble d'entraînement selon la revendication 1, caractérisé en ce que les conduites hydrauliques (a, b) qui s'étendent de la pompe hydraulique (24) au moteur hydraulique (9) situé sur le véhicule tracteur (1) ainsi qu'au moteur hydraulique (20) correspondant situé sur la remorque (11), croisent les conduites (c, d) du second moteur (10) correspondant placé sur le véhicule tracteur (1), qui s'étendent jusqu'au second moteur (19) situé sur la remorque (11).

3. Ensemble d'entraînement selon la revendication 1, caractérisé en ce qu'une articulation sphérique (30) ou une articulation à double charnière est placée entre les deux véhicules (1, 11), et en ce que ces articulations (30) permettent un mouvement de rotation autour des axes (X-Y).

4. Ensemble d'entraînement selon la revendication 3, caractérisé en ce que les timons (26, 27) sont reliés rigidement aux châssis (2, 12) des véhicules correspondants.

5. Ensemble d'entraînement selon la revendication 1, caractérisé en ce que les pompes hydrauliques (24, 25) sont en liaison hydraulique fonctionnelle avec les moteurs (9, 10) correspondants de telle façon que, lorsqu'on négocie un virage orienté vers la droite, il se produit un freinage ou un blocage de la chenille de droite (4) du véhicule tracteur (1), ainsi que de la chenille de gauche (13) de la remorque (11), tandis que, lorsqu'on négocie un virage orienté vers la gauche, il se produit un freinage ou un blocage de la chenille de gauche (3) du véhicule tracteur et de la chenille de droite (14) de la remorque (11).

6. Ensemble d'entraînement selon les revendications 1 à 5, caractérisé en ce qu'une fois la manœuvre de braquage achevée, les forces transmises à la chenille de droite correspondante (4, 14) sont égales aux forces transmises à la chenille de gauche correspondante (3, 13), et inversement, et en ce que la somme des vitesses de rotation des moteurs (9, 20) reliés entre eux est égale à la somme des vitesses de rotation des deux autres moteurs (10, 19).

FIG. 1

FIG.2

FIG.3

FIG.4

FIG.5